# EUROPEAN PATENT SPECIFICATION

(11) **EP 4 280 131 B1**
(45) Date of publication and mention of the grant of the patent: **11.02.2026**
(21) Application number: 23161553.5
(22) Date of filing: 13.03.2023
(51) Int. Cl.: G06Q 10/047

(54) **METHOD AND SYSTEM FOR VEHICLE ROUTE OPTIMIZATION**
VERFAHREN UND SYSTEM ZUR ROUTENOPTIMIERUNG BEI FAHRZEUGEN
PROCÉDÉ ET SYSTÈME D'OPTIMISATION DE ROUTE DE VÉHICULE

(30) Priority: 17.05.2022 IN 202221028386
(43) Date of publication of application: 22.11.2023
(73) Proprietor: Tata Consultancy Services Limited, Maharashtra (IN)
(72) Inventor: GANESAN, VISWANATH KUMAR, 600113 Chennai - Tamil Nadu (IN); KRISHNADAS, HARIPRIYA, 600113 Chennai - Tamil Nadu (IN)
(74) Representative: Goddar, Heinz J.

(56) References cited:
- THANGIAH S R ET AL: "GIDEON: a genetic algorithm system for vehicle routing with time windows", PROCEEDINGS OF THE CONFERENCE ON ARTIFICIAL INTELLIGENCE APPLICATIONS. MIAMI BEACH, FEB. 24 - 28, 1991; [PROCEEDINGS OF THE CONFERENCE ON ARTIFICIAL INTELLIGENCE APPLICATIONS], NEW YORK, IEEE, US, vol. i, 24 February 1991 (1991-02-24), pages 322 - 328, XP010022626, ISBN: 978-0-8186-2135-2, DOI: 10.1109/CAIA.1991.120888
- MOUTHUY S�BASTIEN, MASSEN FLORENCE, DEVILLE YVES, VAN HENTENRYCK PASCAL: "A Multistage Very Large-Scale Neighborhood Search for the Vehicle Routing Problem with Soft Time Windows", TRANSPORTATION SCIENCE, vol. 49, no. 2, 1 May 2015 (2015-05-01), pages 223 - 238, XP009547178, ISSN: 0041-1655, DOI: 10.1287/trsc.2014.0558

## Description

### CROSS-REFERENCE TO RELATED APPLICATIONS AND PRIORITY

The present application claims priority to Indian application no. 202221028386, filed on May 17, 2022.

### TECHNICAL FIELD

The disclosure herein generally relates to route planning, and, more particularly, to a method and system for vehicle route optimization.

### BACKGROUND

Vehicle routing problems (VRP) have been widely studied as combinatorial optimization problems for decades and the need to solve larger sized problems for many practical applications in transportation and logistics have been growing manifold. The expectations to deliver goods to customers with minimized logistics cost and on promised timelines has become an area of interest in recent years with many e-commerce and logistics players bringing in varied capabilities. Many practical applications in delivery logistics share a common problem definition viz., vehicles starting from a common location called depot, visiting multiple customer locations or destinations to deliver goods or services with delivery windows, customer priorities, etc., and finally all of them returning back to the depot while ensuring that each and every customer is serviced once and/or multiple times. When a capacity is imposed on each vehicle it forms a Capacitated VRP (CVRP). A number of variations in VRP are found depending on the requirements on pickup or drop off needs and commitments on delivery such as time windows, on time delivery, etc. Most of the VRPs are classified as NP Hard problem. In certain situations, as it is difficult to optimize a NP Hard problem within a reasonable time limit, soft constraints on violations with respect to delivery requirements on delivery windows, priorities and other related factors at delivery locations are introduced which is defined as the VRP with soft time windows.

Many of the existing approaches have solved the VRP problem with or without time windows using different algorithms and tested with different benchmarks. However, limitation of the existing approaches is that they have not been able to address growing customer demands as well as business requirements to service millions of customers in a larger geography in a planning period with a scalable application hardware and system configurations dynamically in a completely novel automated way that saves good amount of manual effort, and other practical costs.

Document THANGIAH S R ET AL: "GIDEON: a genetic algorithm system for vehicle routing with time windows", PROCEEDINGS OF THE CONFERENCE ON ARTIFICIAL INTELLIGENCE APPLICATIONS, MIAMI BEACH, FEB. 24 - 28, 1991; [PROCEEDINGS OF THE CONFERENCE ON ARTIFICIAL INTELLIGENCE APPLICATIONS], discloses GIDEON, a genetic algorithm system for solving the VRPTW. On a standard set of 56 VRPTW problems obtained from the literature, GIDEON did better than the alternate methods on 41 of them, with an average reduction of 3.9% in fleet size and 4.4% in distance traveled for the 56 problems.

### SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for vehicle route optimization, according to some embodiments of the present disclosure.
FIGS. 2A and 2B (collectively referred to as FIG. 2) is a flow diagram depicting steps involved in the process of vehicle route optimization by the system of FIG. 1, according to some embodiments of the present disclosure.
FIGS. 3A and 3B (collectively referred to as FIG. 3) is a flow diagram depicting steps involved in the process of obtaining the first set of routes, by the system of FIG. 1, in accordance with some embodiments of the present disclosure.
FIG. 4 is a flow diagram depicting a broad overview of the steps in the vehicle route optimization performed by the system of FIG. 1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Many of the existing approaches have solved the Vehicle Routing Problems (VRP) with or without time windows using different algorithms and tested with different benchmarks. However, limitation of the existing approaches is that they have not been able to address growing customer demands as well as business requirements to service millions of customers in a larger geography in a planning period with a scalable application hardware and system configurations dynamically in a completely in a novel automated way that saves good amount of manual effort, invention and other practical costs. Method and system disclosed herein are related to route planning, and, more particularly, for vehicle route optimization.

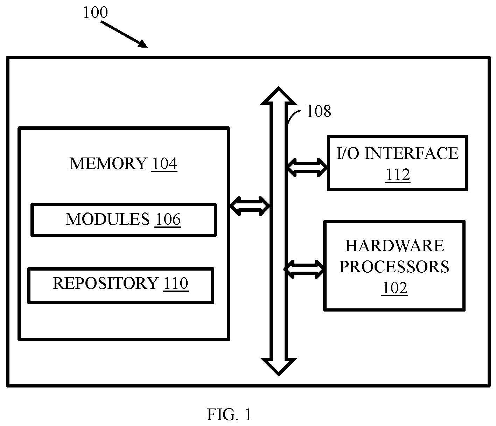

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for vehicle route optimization, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the vehicle route optimization, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the vehicle route optimization.

The data repository (or repository) 110 may include a plurality of abstracted piece of code for refinement and data that is processed, received, or generated as a result of the execution of the plurality of modules in the module(s) 106.

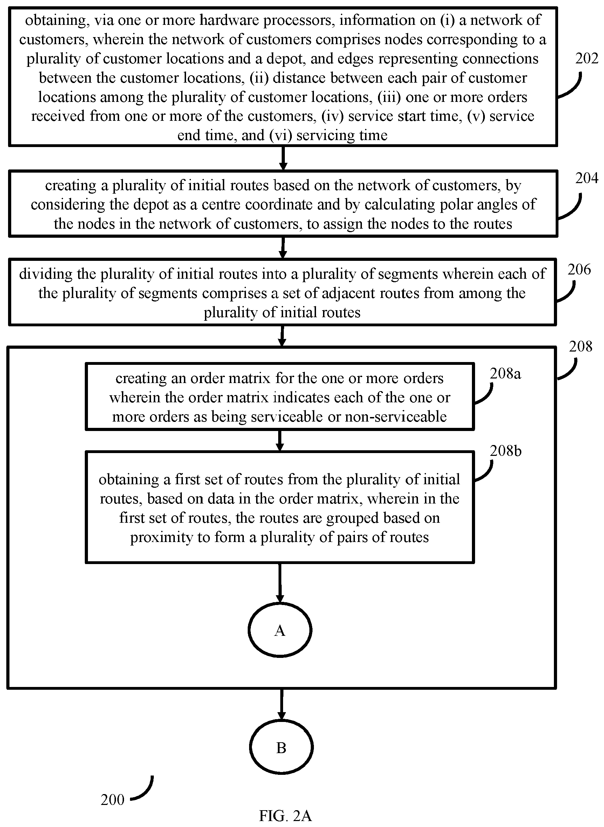

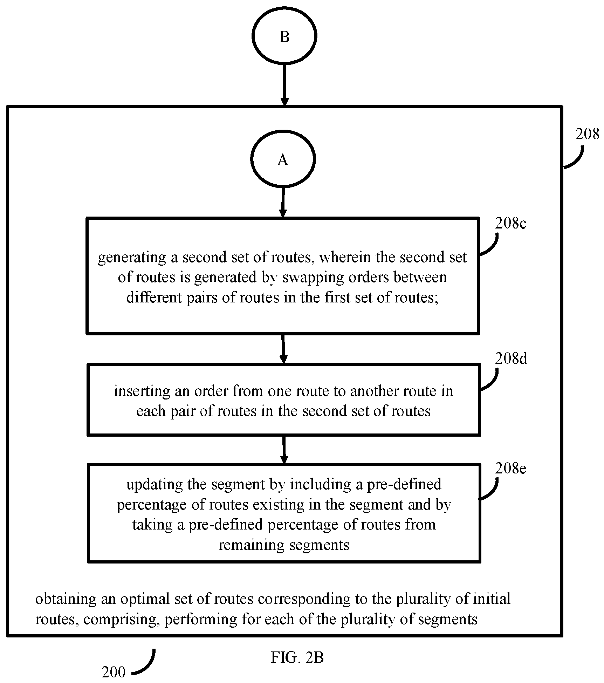

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagram FIG. 2.

FIGS. 2A and 2B (collectively referred to as FIG. 2) is a flow diagram depicting steps involved in the process of vehicle route optimization by the system of FIG. 1, according to some embodiments of the present disclosure.

A capacitated vehicle routing problem with soft time windows, which is addressed by the system 100 is defined as follows. The problem comprises of a set of identical fleet *F* of capacity *h* and a network of customers *G(V,E)* where *V* = {*v*₁*,v*₂,....,*vₙ*,*v*_{*n*+1}} represents set of *N* customer locations, *v*_{*n*+1} represents the depot and *E* represents the edges between them and *E* = (*i,j*) where *i*≠*j*; *i,j*>0 and *i,j* ∈ *V.* Each edge (*i,j*) represents the connectivity between the customer locations *i* and *j.* The distance between two customers is denoted as *dᵢⱼ.* Each order from a customer *i* may have a demand *qᵢ*, and if provided as inputs we may also have service start time *ssᵢ* service end time *seᵢ,* and a servicing time *sᵢ* along with customer priorities *pᵢ*, and other related business parameters as applicable. In case, when an order should be serviced within the given *ssᵢ* and *seᵢ,* then a vehicle which has arrived early at the order needs to wait till *ssᵢ* (Type 1 instance as described in Mouthuy et.al). Each customer is defined in a geography using a set of geo-coordinates with values for latitude, *latᵢ* and longitude, *longᵢ.*
Assumptions used to define the problem completely are as follows:
- A vehicle starts from a depot and each customer is visited only once by any one of the vehicles.
- The sum of the demand taken by the vehicle not to exceed its capacity Σ*qᵢ* <= *h.*
- The servicing time si, at each customer point should be between the service start time, *ssᵢ* and service end time, *seᵢ.* [ *ssᵢ < sᵢ < seᵢ* ], or as applicable with and without delivery windows.
- A vehicle arriving early should wait till *ssᵢ* to start its service or as applicable.
- The vehicle departs immediately from the customer location after servicing the customer *i*.
- An order is considered as violated if it is serviced beyond its service end time, *seᵢ.*
- All the vehicles return to the depot after its service completion.

At step 202 of the method 200, the system 100 obtains, via the one or more hardware processors 104, information on (i) a network of customers, wherein the network of customers comprises nodes corresponding to a plurality of customer locations and a depot, and edges representing connections between the customer locations, (ii) distance between each pair of customer locations among the plurality of customer locations, (iii) one or more orders received from one or more of the customers, (iv) service start time, if provided, (v) service end time, and (vi) servicing time and any other related business parameters as applicable and available, as input data.

Further, at step 204 of the method 200, the system 100 creates a plurality of initial routes based on the network of customers, by considering the depot as a centre coordinate (0,0) and by calculating polar angles of the nodes in the network of customers, to assign the nodes to the routes. The nodes are sorted based upon a minimum angle from the depot. Starting with angle as 0, the routes are created with minimum angle nodes until the capacity constraint is satisfied. Once a route is completed the aforementioned steps are repeated until all the nodes are added to the routes.

After forming the routes, heuristics need to be applied for further optimization of the routes. However, applying the heuristics on routes that are far away from each other adversely affects solution quality. In order to address this, at step 206 of the method 200, the system 100 combines nearby routes. To combine the nearby routes, the system 100 divides the plurality of initial routes into a plurality of segments wherein each of the plurality of segments comprises a set of adjacent routes from among the plurality of initial routes. The routes may be identified as adjacent routes by using a pruning technique, in which the number of neighbors for a chosen node or a partial sequence (consecutive set of nodes or customer locations in a route) for an applicable move is determined by the extreme latitude and longitude coordinates of the route that form a rectangle around the route. A neighbor for a node (or a partial sequence) is selected only if the co-ordinate of the node lies within extreme coordinates of the neighbor thus reducing the number of local moves performed.

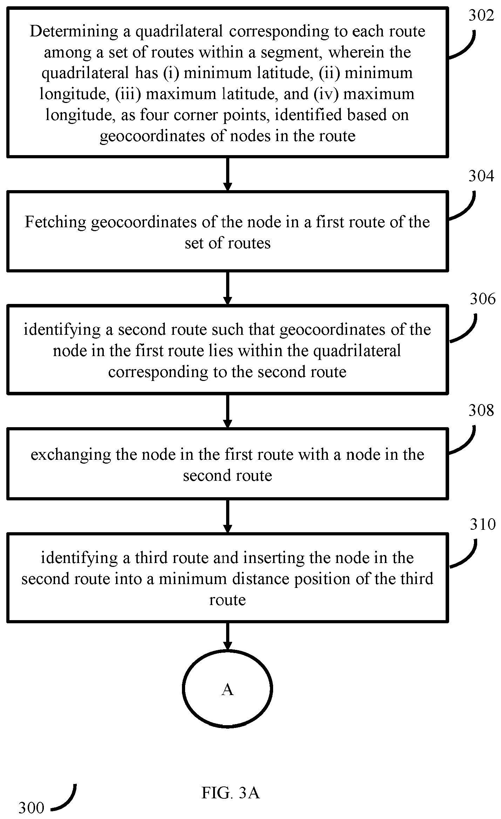

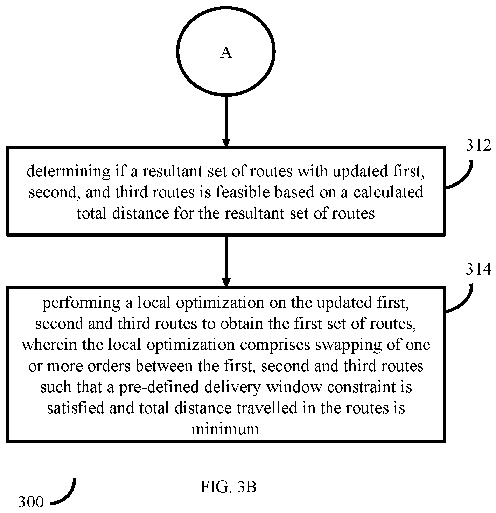

Further, at step 208 of the method 200, the system 100 obtains an optimal set of routes corresponding to the plurality of initial routes. The system 100 obtains the optimal set of routes by performing steps 208a through 208e, for each of the plurality of segments. At step 208a, the system 100 creates an order matrix for the one or more orders wherein the order matrix indicates each of the one or more orders as being serviceable or non-serviceable. An order matrix of size *k* x *k* is defined that checks the feasibility between the orders. Elements of the matrix a take value 1 when a vehicle can reach from order *i* to order *j* and service order *j* within the delivery time windows, else takes the value as 0. Further, at step 208b, the system 100 obtains a first set of routes from the plurality of initial routes, based on data in the order matrix, wherein in the first set of routes, the routes are grouped based on proximity to form a plurality of pairs of routes. Various steps involved in the process of obtaining the first set of routes are depicted in method 300 in FIG. 3, and are explained hereafter.

At step 302 of the method 300, the system 100 determines a quadrilateral corresponding to each route among a set of routes within a segment, wherein the quadrilateral has (i) minimum latitude, (ii) minimum longitude, (iii) maximum latitude, and (iv) maximum longitude, as four corner points, identified based on geocoordinates of nodes in the route. At step 304 of the method 300, the system 100 fetches geocoordinates of the node in a first route of the set of routes. In an embodiment, the geocoordinates are fetched from an associated database in which the geocoordinates are stored. In another embodiment, the geocoordinates may be fetched/collected using a geo-positioning system that may be associated with the system 100. Further, at step 306 of the method 300, the system 100 identifies a second route such that geocoordinates of the node in the first route lies within the quadrilateral corresponding to the second route. Further, at step 308 of the method 300, the system 100 exchanges the node in the first route with a node in the second route. Further, at step 310 of the method 300, the system 100 identifies a third route and inserts the node in the second route into a minimum distance position of the third route. A node can be placed in a route at any position. Placing a node at different position would yield different distances. The term "minimum distance position" in this context refers to the fact that the node is placed into another route in a position which yields the minimum distance. The third route also is selected such that geocoordinates of the node in the second route lies within the quadrilateral corresponding to the third route. With the insertion of the nodes, the first node, the second node, and the third node get updated. Further, at step 312 of the method 300, the system 100 determines if a resultant set of routes with updated first, second, and third routes is feasible based on a calculated total distance for the resultant set of routes. To determine if the resultant set of routes is feasible, the system 100 calculates, from an initial solution, the total distance of all the routes. When nodes are moved between routes or any improvement or optimization happens, the system 100 confirms that the total distance of the resultant set of routes have lesser distance than the distance calculated from the initial solution. If the calculated distance for the resultant set of routes at any instance is less, the system 100 replaces the initial solution with the newly obtained resultant set of routes and updates the initial total distance. Further, at step 314 of the method 300, the system 100 performs a local optimization on the updated first, second and third routes to obtain the first set of routes, wherein the local optimization comprises swapping of one or more orders between the first, second and third routes such that a pre-defined delivery window constraint is satisfied and total distance travelled in the routes is minimum. In an embodiment, in addition to or in place of the delivery window constraints, other hard/soft constraints related to deliveries, priorities, and/or any other aspects may be defined and configured. For each node under each sector, the system 100 attempts a swap with other nodes of other routes or same route, provided that the swapping doesn't violate the time window constraints. If the total distance of the new set of routes is lesser than the total set of initial set of routes, the system updates the existing solution with a new solution and also update the total distance. In this context, total distance is the distance travelled by all the routes. The routes obtained with the local optimization form the first set of routes.

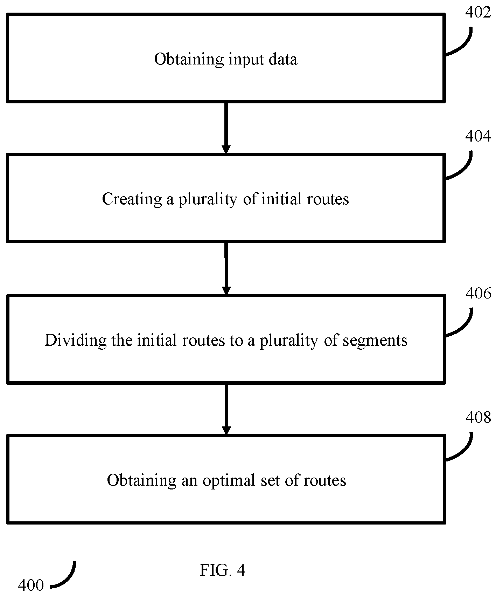

Further, at step 208c, the system 100 generates a second set of routes, wherein the second set of routes is generated by swapping orders between different pairs of routes in the first set of routes. Further, at step 208d, the system 100 inserts an order from one route to another route in each pair of routes in the second set of routes. Further, at step 208e, the system 100 updates the segment by including a pre-defined percentage of routes existing in the segment and by taking a pre-defined percentage of routes from remaining segments. At this stage, the system 100 takes each node of all the routes for insert move, such that the insertion doesn't violate the time violation constraints. If the resultant set of routes have lesser total distance, then the original solution is replaced with new solution. The routes after optimizing the segment form the optimal set of routes, which may be then used for delivery of the orders. A broad overview of the steps involved in the vehicle route optimization are depicted in FIG. 4.

### Experimental Results:

The performance of the method 200 is compared and discussed using the results obtained with the benchmark problems and test data sets in this section. Performance of the method 200 was evaluated against the results presented in Mouthuy et al.( https://www.researchgate net/publication/276416834 A Multistage Very Large-Scale_Neighborhood_Search_for_the_Vehicle_Routing_Problem_with_Soft_Time_ Windows), on Solomon benchmark instances. Random instances of solomon dataset were considered and applied Type 1 violation as discussed in Mouthy et al.,[10] where vehicle would wait till its service start time. The results have been presented with minimum number of vehicles and distance obtainable for 100% no violation. The results were obtained in less than 10secs and are presented in Table 1. For the same solomon dataset random instances the violation constraint was relaxed and the results were obtained. In all the cases lesser number of vehicles was obtained. Time taken for all the instances were less than 5secs which is much lesser than the time taken by Mouthy et al.. The results are presented in Table 2. As the focus during the experiments was on large datasets, instances ranging 500 to 10,000 customers were created for parcel distribution in the state of Tamil Nadu, India from a real-life case example and compared the performance of the algorithm against the VLSN. Test instances with 40,000 and 50,000 customer locations in Tamil Nadu geography were also generated to evaluate the method 200 for scalability and performance. The distances between two locations on datasets from Tamil Nadu were computed using Haversine formula. The customer demand qi for the new test instances have been generated using uniform distribution [10,30] and capacity of the vehicle was defined as 200. Delivery start time was defined as the distance from the depot to the delivery location (d) and delivery end time is defined by randomly generating a number from a uniform distribution [1.5d, 2d]. Service time was defined as constant with 10time units. The VLSN algorithm was not able to scale after 2500 datapoints. A comparison of VLSN with the results obtained with method 200 is given, where 100% no violation was taken as the objective and minimizing vehicles and distance. The results are presented in Table 3. For the instances with 40000 and 50000 different clusters, limit is applied and is presented in Table 4. The method 200 was implemented in Java 7.0 and experiments were run on Windows 10 environment using Intel (R) Core (TM) i5-4570T 2.9 GHz CPU with 8 GB RAM memory.

**Table 1. Comparing vlsn algorithm with method 200 for R1 Instance of solomon dataset (Hard Time Constraint)**

| VLSN | | | | | Method 200 results | | | |
|---|---|---|---|---|---|---|---|---|
| Size | Number of Vehicles | Distance | Orders not Violated | Time (sec) | Number of Vehicles | Distance | Orders not Violated | Time (sec) |
| R101 | 11 | 1214 | 61 | 499 | 30 | 1985 | 100 | 10 |
| R102 | 10 | 1172 | 68 | 523 | 25 | 1779 | 100 | 9 |
| R103 | 9 | 1008 | 76 | 599 | 21 | 1468 | 100 | 8.5 |
| R104 | 9 | 977 | 93 | 624 | 16 | 1253 | 100 | 7 |
| R105 | 10 | 1186 | 69 | 573 | 21 | 1619 | 100 | 7.8 |
| R106 | 10 | 1091 | 81 | 640 | 18 | 1474 | 100 | 8 |
| R107 | 9 | 1013 | 83 | 555 | 14 | 1251 | 100 | 7.7 |
| R108 | 9 | 1004 | 96 | 696 | 13 | 1074 | 100 | 6.5 |
| R109 | 10 | 1132 | 88 | 629 | 16 | 1308 | 100 | 6.6 |
| R110 | 9 | 1010 | 82 | 527 | 17 | 1341 | 100 | 6.8 |
| R111 | 9 | 1016 | 82 | 635 | 16 | 1245 | 100 | 6.9 |
| R112 | 9 | 1000 | 95 | 644 | 12 | 1040 | 100 | 4.7 |

**Table 2. Comparing vlsn algorithm with method 200 for R1 Instance of solomon dataset (Soft Time Constraint)**

| VLSN | | | | | Method 200 Results | | | |
|---|---|---|---|---|---|---|---|---|
| Size | Number of Vehicles | Distance | Orders not Violated | Time (sec) | Number of Vehicles | Distance | Orders not Violated | Ti me (se c) |
| R101 | 11 | 1214 | 61 | 499 | 8 | 1270 | 40 | 4 |
| R102 | 10 | 1172 | 68 | 523 | 8 | 1155 | 57 | 4.7 |
| R103 | 9 | 1008 | 76 | 599 | 8 | 1162 | 64 | 4.8 |
| R104 | 9 | 977 | 93 | 624 | 8 | 1077 | 81 | 4.6 |
| R105 | 10 | 1186 | 69 | 573 | 8 | 1312 | 58 | 4 |
| R106 | 10 | 1091 | 81 | 640 | 8 | 1120 | 72 | 4.7 |
| R107 | 9 | 1013 | 83 | 555 | 8 | 1096 | 72 | 4 |
| R108 | 9 | 1004 | 96 | 696 | 8 | 1059 | 81 | 4 |
| R109 | 10 | 1132 | 88 | 629 | 8 | 1236 | 60 | 4 |
| R110 | 9 | 1010 | 82 | 527 | 8 | 1233 | 68 | 4.7 |
| R111 | 9 | 1016 | 82 | 635 | 8 | 1074 | 65 | 4.7 |
| R112 | 9 | 1000 | 95 | 644 | 8 | 1088 | 74 | 4.2 |

**Table 3. Comparison of results with large problem instances from Tamil Nadu state, India.**

| VLSN | | | | | Results of method 200 | | | |
|---|---|---|---|---|---|---|---|---|
| Size | Number of Vehicle | Distance | Orders not Violat ed | Time (min s) | Number of Vehicles | Distance | Orders not Violated | Time (mins) |
| 500 | 64 | 6335 | 328 | 3.95 | 77 | 10354 | 500 | 0.25 |
| 1000 | 128 | 12996 | 804 | 35.5 5 | 135 | 21853 | 1000 | 0.466 667 |
| 2500 | 318 | 59442 | 2029 | 1351 | 342 | 80395 | 2500 | 1.166 667 |
| 5000 | | | | | 676 | 173189 | 5000 | 2.466 667 |
| 7500 | | | | | 1003 | 285556 | 7500 | 4.083 333 |
| 1000 0 | | | | | 1331 | 472744 | 10000 | 5.983 333 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of vehicle route optimization. The embodiment, thus provides a mechanism of optimizing routes by determining possibility of exchanging orders between different routes that are close to each other.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for vehicle route optimization, comprising:
obtaining (202), via one or more hardware processors (102), information on (i) a network of customers, wherein the network of customers comprises nodes corresponding to a plurality of customer locations and a depot, and edges representing connections between the customer locations, (ii) distance between each pair of customer locations among the plurality of customer locations, (iii) one or more orders received from one or more of the customers from the network of customers, (iv) service start time, (v) service end time, and (vi) servicing time;
creating (204) a plurality of initial routes based on the network of customers, by considering the depot as a center coordinate and by calculating polar angles of the nodes in the network of customers, to assign the nodes to the plurality of initial routes;
applying heuristics for optimizing the plurality of initial routes, wherein optimizing the plurality of initial routes combines a plurality of nearby routes, wherein combining the plurality of nearby routes comprises:
dividing (206) the plurality of initial routes into a plurality of segments wherein each of the plurality of segments comprises a set of adjacent routes from among the plurality of initial routes; and
obtaining (208) an optimal set of routes corresponding to the plurality of initial routes, **characterised by** performing for each of the plurality of segments the steps of:
creating (208a) an order matrix for the one or more orders wherein the order matrix indicates each of the one or more orders as being serviceable or non-serviceable, wherein the serviceable orders refers to the orders which can reach within delivery time windows;
obtaining (208b) a first set of routes from the plurality of initial routes, based on data in the order matrix, wherein routes among the first set of routes are grouped based on proximity to form a plurality of pairs of routes, wherein obtaining the first set of routes comprises:
determining a quadrilateral corresponding to each route among a set of routes within the segment, wherein the quadrilateral has (i) minimum latitude, (ii) minimum longitude, (iii) maximum latitude, and (iv) maximum longitude, as four corner points, identified based on geocoordinates of nodes in the route;
fetching geocoordinates of the node in a first route in the set of routes;
identifying a second route such that geocoordinates of the node in the first route lies within the quadrilateral corresponding to the second route;
exchanging the node in the first route with a node in the second route;
identifying a third route and inserting the node in the second route into a minimum distance position of the third route;
determining if a resultant set of routes with updated first, second, and third routes is feasible based on a calculated total distance for the resultant set of routes, wherein determining if the resultant set of routes is feasible comprises:
calculating from an initial solution, a total distance of all routes, wherein the total distance is the distance travelled by all the routes;
confirming that the total distance of resultant set of routes have lesser distance than the distance calculated from the initial solution when nodes are moved between the routes; and
replacing the initial solution with newly obtained resultant set of routes and updating the initial total distance; and
performing a local optimization on the updated first, second and third routes to obtain the first set of routes, wherein the local optimization comprises swapping of one or more orders between the first, second and third routes such that a pre-defined delivery window constraint is satisfied and total distance travelled in the routes is minimum;
generating (208c) a second set of routes, wherein the second set of routes is generated by swapping orders between different pairs of routes in the first set of routes;
inserting (208d) an order from one route to another route in each pair of routes in the second set of routes, wherein a vehicle starts from a depot and each customer is visited only once by any one of one or more vehicles and sum of a demand taken by a vehicle does not exceed capacity Σ*qᵢ* <= *h,* wherein servicing time *sᵢ*, at each customer point should be between the service start time, *ssᵢ* and service end time, *seᵢ.* [ *ssᵢ* < *sᵢ < seᵢ* ], or as applicable with and without delivery windows, wherein the vehicle arriving early should wait till *ssᵢ* to start service and the vehicle departs immediately from customer location after servicing customer i*,* and an order is considered as violated if it is serviced beyond its service end time, *seᵢ,* and wherein the one or more vehicles return from the depot after completion of the service;
updating (208e) the segment by including a pre-defined percentage of routes existing in the segment and by taking a pre-defined percentage of routes from remaining segments; and
using the routes after optimizing the segment from the optimal set of routes for delivery of the orders.

2. The method of claim 1, wherein the swapping of the orders is performed only if a resulting route satisfies a pre-defined delivery window constraint and reduces total distance travelled in the routes at least by a pre-defined percentage.

3. The method of claim 1, wherein the insertion of routes is performed only if a resultant route satisfies a delivery window constraint and reduces total distance travelled in the routes at least by a pre-defined percentage.

4. A system for vehicle route optimization, comprising:
one or more hardware processors (102);
a communication interface (112); and
a memory (104) storing a plurality of instructions, wherein the plurality of instructions when executed, cause the one or more hardware processors to:
obtain information on (i) a network of customers, wherein the network of customers comprises nodes corresponding to a plurality of customer locations and a depot, and edges representing connections between the customer locations, (ii) distance between each pair of customer locations among the plurality of customer locations, (iii) one or more orders received from one or more of the customers from the network of customers, (iv) service start time, (v) service end time, and (vi) servicing time;
create a plurality of initial routes based on the network of customers, by considering the depot as a center coordinate and by calculating polar angles of the nodes in the network of customers, to assign the nodes to the plurality of initial routes;
apply heuristics for optimizing the plurality of initial routes, wherein optimizing the plurality of initial routes combines a plurality of nearby routes, wherein combining the plurality of nearby routes comprises:
dividing the plurality of initial routes into a plurality of segments wherein each of the plurality of segments comprises a set of adjacent routes from among the plurality of initial routes; and
obtaining an optimal set of routes corresponding to the plurality of initial routes, **characterised by** performing for each of the plurality of segments the steps of:
creating an order matrix for the one or more orders wherein the order matrix indicates each of the one or more orders as being serviceable or non-serviceable, wherein the serviceable orders refers to the orders which can reach within delivery time windows;
obtaining a first set of routes from the plurality of initial routes, based on data in the order matrix, wherein routes among the first set of routes are grouped based on proximity to form a plurality of pairs of routes, wherein obtaining the first set of routes comprises:
determining a quadrilateral corresponding to each route among a set of routes within the segment, wherein the quadrilateral has (i) minimum latitude, (ii) minimum longitude, (iii) maximum latitude, and (iv) maximum longitude, as four corner points, identified based on geocoordinates of nodes in the route;
fetching geocoordinates of the node in a first route in the set of routes;
identifying a second route such that geocoordinates of the node in the first route lies within the quadrilateral corresponding to the second route;
exchanging the node in the first route with a node in the second route;
identifying a third route and inserting the node in the second route into a minimum distance position of the third route;
determining if a resultant set of routes with updated first, second, and third routes is feasible based on a calculated total distance for the resultant set of routes, wherein determining if the resultant set of routes is feasible comprises:
calculating from an initial solution, a total distance of all routes, wherein the total distance is the distance travelled by all the routes;
confirming that the total distance of resultant set of routes have lesser distance than the distance calculated from the initial solution when nodes are moved between the routes; and
replacing the initial solution with newly obtained resultant set of routes and updating the initial total distance; and
performing a local optimization on the updated first, second and third routes to obtain the first set of routes, wherein the local optimization comprises swapping of one or more orders between the first, second and third routes such that a pre-defined delivery window constraint is satisfied and total distance travelled in the routes is minimum;
generating a second set of routes, wherein the second set of routes is generated by swapping orders between different pairs of routes in the first set of routes;
inserting an order from one route to another route in each pair of routes in the second set of routes;
updating the segment by including a pre-defined percentage of routes existing in the segment and by taking a pre-defined percentage of routes from remaining segments, wherein a vehicle starts from a depot and each customer is visited only once by any one of one or more vehicles and sum of a demand taken by a vehicle does not exceed capacity Σ*qᵢ* <= *h,* wherein servicing time *sᵢ*, at each customer point should be between the service start time, *ssᵢ* and service end time, *seᵢ.* [ *ssᵢ* < *sᵢ < seᵢ* ], or as applicable with and without delivery windows, wherein the vehicle arriving early should wait till *ssᵢ* to start service and the vehicle departs immediately from customer location after servicing customer i*,* and an order is considered as violated if it is serviced beyond its service end time, *seᵢ,* and wherein the one or more vehicles return from the depot after completion of the service; and
using the routes after optimizing the segment from the optimal set of routes for delivery of the orders.

5. The system as claimed in claim 4, wherein the one or more hardware processors are configured to perform swapping of the orders only if a resulting route satisfies a pre-defined delivery window constraint and reduces total distance travelled in the routes at least by a pre-defined percentage.

6. The system as claimed in claim 4, wherein the one or more hardware processors are configured to perform the insertion of routes only if a resultant route satisfies a delivery window constraint and reduces total distance travelled in the routes at least by a pre-defined percentage.

7. One or more non-transitory machine-readable information storage mediums comprising one or more instructions which when executed by one or more hardware processors cause:
obtaining information on (i) a network of customers, wherein the network of customers comprises nodes corresponding to a plurality of customer locations and a depot, and edges representing connections between the customer locations, (ii) distance between each pair of customer locations among the plurality of customer locations, (iii) one or more orders received from one or more of the customers from the network of customers, (iv) service start time, (v) service end time, and (vi) servicing time;
creating a plurality of initial routes based on the network of customers, by considering the depot as a center coordinate and by calculating polar angles of the nodes in the network of customers, to assign the nodes to the plurality of initial routes;
applying heuristics for optimizing the plurality of initial routes, wherein optimizing the plurality of initial routes combines a plurality of nearby routes, wherein combining the plurality of nearby routes comprises:
dividing the plurality of initial routes into a plurality of segments wherein each of the plurality of segments comprises a set of adjacent routes from among the plurality of initial routes; and
obtaining an optimal set of routes corresponding to the plurality of initial routes, **characterised by** performing for each of the plurality of segments the steps of:
creating an order matrix for the one or more orders wherein the order matrix indicates each of the one or more orders as being serviceable or non-serviceable, wherein the serviceable orders refers to the orders which can reach within delivery time windows;
obtaining a first set of routes from the plurality of initial routes, based on data in the order matrix, wherein routes among the first set of routes are grouped based on proximity to form a plurality of pairs of routes, wherein obtaining the first set of routes comprises:
determining a quadrilateral corresponding to each route among a set of routes within the segment, wherein the quadrilateral has (i) minimum latitude, (ii) minimum longitude, (iii) maximum latitude, and (iv) maximum longitude, as four corner points, identified based on geocoordinates of nodes in the route;
fetching geocoordinates of the node in a first route in the set of routes;
identifying a second route such that geocoordinates of the node in the first route lies within the quadrilateral corresponding to the second route;
exchanging the node in the first route with a node in the second route;
identifying a third route and inserting the node in the second route into a minimum distance position of the third route;
determining if a resultant set of routes with updated first, second, and third routes is feasible based on a calculated total distance for the resultant set of routes, wherein determining if the resultant set of routes is feasible comprises:
calculating from an initial solution, a total distance of all routes, wherein the total distance is the distance travelled by all the routes;
confirming that the total distance of resultant set of routes have lesser distance than the distance calculated from the initial solution when nodes are moved between the routes; and
replacing the initial solution with newly obtained resultant set of routes and updating the initial total distance; and
performing a local optimization on the updated first, second and third routes to obtain the first set of routes, wherein the local optimization comprises swapping of one or more orders between the first, second and third routes such that a pre-defined delivery window constraint is satisfied and total distance travelled in the routes is minimum;
generating a second set of routes, wherein the second set of routes is generated by swapping orders between different pairs of routes in the first set of routes;
inserting an order from one route to another route in each pair of routes in the second set of routes;
updating the segment by including a pre-defined percentage of routes existing in the segment and by taking a pre-defined percentage of routes from remaining segments, wherein a vehicle starts from a depot and each customer is visited only once by any one of one or more vehicles and sum of a demand taken by a vehicle does not exceed capacity Σ*qᵢ* <= *h,* wherein servicing time *sᵢ*, at each customer point should be between the service start time, *ssᵢ* and service end time, *seᵢ.* [ *ssᵢ < sᵢ < seᵢ* ], or as applicable with and without delivery windows, wherein the vehicle arriving early should wait till *ssᵢ* to start service and the vehicle departs immediately from customer location after servicing customer i*,* and an order is considered as violated if it is serviced beyond its service end time, *seᵢ,* and wherein the one or more vehicles return from the depot after completion of the service; and
using the routes after optimizing the segment from the optimal set of routes for delivery of the orders.

8. The one or more non-transitory machine-readable information storage mediums of claim 7, wherein the swapping of the orders is performed only if a resulting route satisfies a pre-defined delivery window constraint and reduces total distance travelled in the routes at least by a pre-defined percentage.

9. The one or more non-transitory machine-readable information storage mediums of claim 7, wherein the insertion of routes is performed only if a resultant route satisfies a delivery window constraint and reduces total distance travelled in the routes at least by a pre-defined percentage.

## Patentansprüche

1. Prozessorimplementiertes Verfahren (200) zur Fahrzeugroutenoptimierung, umfassend:
Erhalten (202), über einen oder mehrere Hardwareprozessoren (102), von Informationen über (i) ein Kundennetzwerk, wobei das Kundennetzwerk Knoten umfasst, die einer Mehrzahl von Kundenstandorten und einem Depot entsprechen, und Kanten, die Verbindungen zwischen den Kundenstandorten darstellen, (ii) Abstand zwischen jedem Paar von Kundenstandorten unter der Mehrzahl von Kundenstandorten, (iii) einen oder mehrere Aufträge, die von einem oder mehreren der Kunden von dem Kundennetzwerk empfangen werden, (iv) Servicestartzeit, (v) Serviceendzeit und (vi) Servicezeit;
Erstellen (204) einer Mehrzahl von Anfangsrouten basierend auf dem Kundennetzwerk, durch Betrachten des Depots als eine Mittelkoordinate und durch Berechnen von Polarwinkeln der Knoten in dem Kundennetzwerk, um die Knoten der Mehrzahl von Anfangsrouten zuzuweisen;
Anwenden von Heuristik zum Optimieren der Mehrzahl von Anfangsrouten, wobei das Optimieren der Mehrzahl von Anfangsrouten eine Mehrzahl von nahegelegenen Routen kombiniert, wobei das Kombinieren der Mehrzahl von nahegelegenen Routen umfasst:
Teilen (206) der Mehrzahl von Anfangsrouten in eine Mehrzahl von Segmenten, wobei jedes der Mehrzahl von Segmenten einen Satz von benachbarten Routen aus der Mehrzahl von Anfangsrouten umfasst; und
Erhalten (208) eines optimalen Satzes von Routen, die der Mehrzahl von Anfangsrouten entsprechen, **gekennzeichnet durch** Durchführen der folgenden Schritte für jedes der Mehrzahl von Segmenten:
Erstellen (208a) einer Auftragsmatrix für den einen oder die mehreren Aufträge, wobei die Auftragsmatrix jeden des einen oder der mehreren Aufträge als betriebsfähig oder nicht betriebsfähig angibt, wobei sich die betriebsfähigen Aufträge auf die Aufträge beziehen, die innerhalb von Lieferzeitfenstern erreichen können;
Erhalten (208b) eines ersten Satzes von Routen aus der Mehrzahl von Anfangsrouten basierend auf Daten in der Auftragsmatrix, wobei Routen aus dem ersten Satz von Routen basierend auf Nähe gruppiert werden, um eine Mehrzahl von Routenpaaren zu bilden, wobei das Erhalten des ersten Satzes von Routen umfasst:
Bestimmen eines Vierecks, das jeder Route aus einem Satz von Routen innerhalb des Segments entspricht, wobei das Viereck (i) minimalen Breitengrad, (ii) minimalen Längengrad, (iii) maximalen Breitengrad und (iv) maximalen Längengrad als vier Eckpunkte aufweist, die basierend auf Geokoordinaten von Knoten in der Route identifiziert werden;
Abrufen von Geokoordinaten des Knotens in einer ersten Route in dem Satz von Routen;
Identifizieren einer zweiten Route derart, dass Geokoordinaten des Knotens in der ersten Route innerhalb des Vierecks liegen, das der zweiten Route entspricht;
Austauschen des Knotens in der ersten Route mit einem Knoten in der zweiten Route;
Identifizieren einer dritten Route und Einfügen des Knotens in der zweiten Route in eine Minimalabstandsposition der dritten Route;
Bestimmen, ob ein resultierender Satz von Routen mit aktualisierten ersten, zweiten und dritten Routen durchführbar ist, basierend auf einem berechneten Gesamtabstand für den resultierenden Satz von Routen, wobei das Bestimmen, ob der resultierende Satz von Routen durchführbar ist, Folgendes umfasst:
Berechnen eines Gesamtabstands aller Routen aus einer anfänglichen Lösung, wobei der Gesamtabstand der von allen Routen zurückgelegte Abstand ist;
Bestätigen, dass der Gesamtabstand des resultierenden Satzes von Routen einen geringeren Abstand als der aus der anfänglichen Lösung berechnete Abstand aufweist, wenn Knoten zwischen den Routen bewegt werden; und
Ersetzen der anfänglichen Lösung durch einen neu erhaltenen resultierenden Satz von Routen und Aktualisieren des anfänglichen Gesamtabstands; und
Durchführen einer lokalen Optimierung an den aktualisierten ersten, zweiten und dritten Routen, um den ersten Satz von Routen zu erhalten, wobei die lokale Optimierung das Austauschen einer oder mehrerer Bestellungen zwischen den ersten, zweiten und dritten Routen umfasst, so dass eine vordefinierte Lieferfensterbeschränkung erfüllt ist und der in den Routen zurückgelegte Gesamtabstand minimal ist;
Erzeugen (208c) eines zweiten Satzes von Routen, wobei der zweite Satz von Routen durch Austauschen von Bestellungen zwischen verschiedenen Routenpaaren in dem ersten Satz von Routen erzeugt wird;
Einfügen (208d) einer Bestellung von einer Route zu einer anderen Route in jedem Routenpaar in dem zweiten Satz von Routen, wobei ein Fahrzeug von einem Depot startet und jeder Kunde nur einmal von einem beliebigen von einem oder mehreren Fahrzeugen besucht wird und die Summe einer von einem Fahrzeug genommenen Nachfrage die Kapazität Σ*qᵢ* <= *h* nicht überschreitet, wobei die Wartungszeit *sᵢ* an jedem Kundenpunkt zwischen der Wartungsstartzeit, *ssᵢ* und der Wartungsendzeit, *seᵢ,* liegen sollte. [*ssᵢ* < *sᵢ < seᵢ* ], oder wie anwendbar mit und ohne Lieferfenster, wobei das Fahrzeug, das früh ankommt, bis *ssᵢ* warten sollte, um die Wartung zu starten, und das Fahrzeug unmittelbar vom Kundenstandort nach der Wartung des Kunden *i* abfährt, und eine Bestellung als verletzt angesehen wird, wenn sie über ihre Wartungsendzeit, *seᵢ,* hinaus gewartet wird, und wobei das eine oder die mehreren Fahrzeuge nach Abschluss der Wartung aus dem Depot zurückkehren;
Aktualisieren (208e) des Segments durch Einschließen eines vordefinierten Prozentsatzes von Routen, die in dem Segment vorhanden sind, und durch Nehmen eines vordefinierten Prozentsatzes von Routen aus verbleibenden Segmenten; und
Verwenden der Routen nach dem Optimieren des Segments aus dem optimalen Satz von Routen zur Lieferung der Bestellungen.

2. Verfahren nach Anspruch 1, wobei das Austauschen der Bestellungen nur durchgeführt wird, wenn eine resultierende Route eine vordefinierte Lieferfensterbeschränkung erfüllt und den in den Routen zurückgelegten Gesamtabstand mindestens um einen vordefinierten Prozentsatz reduziert.

3. Verfahren nach Anspruch 1, wobei das Einfügen von Routen nur durchgeführt wird, wenn eine resultierende Route eine Lieferfensterbeschränkung erfüllt und den in den Routen zurückgelegten Gesamtabstand mindestens um einen vordefinierten Prozentsatz reduziert.

4. System zur Fahrzeugroutenoptimierung, umfassend:
einen oder mehrere Hardwareprozessoren (102);
eine Kommunikationsschnittstelle (112); und
einen Speicher (104), der eine Mehrzahl von Anweisungen speichert, wobei die Mehrzahl von Anweisungen, wenn sie ausgeführt werden, den einen oder die mehreren Hardwareprozessoren veranlassen zum:
Erhalten von Informationen über (i) ein Kundennetzwerk, wobei das Kundennetzwerk Knoten umfasst, die einer Mehrzahl von Kundenstandorten und einem Depot entsprechen, und Kanten, die Verbindungen zwischen den Kundenstandorten darstellen, (ii) Abstand zwischen jedem Paar von Kundenstandorten unter der Mehrzahl von Kundenstandorten, (iii) einen oder mehrere Aufträge, die von einem oder mehreren der Kunden von dem Kundennetzwerk empfangen werden, (iv) Servicestartzeit, (v) Serviceendzeit und (vi) Servicezeit;
Erstellen einer Mehrzahl von Anfangsrouten basierend auf dem Kundennetzwerk, durch Betrachten des Depots als eine Mittelkoordinate und durch Berechnen von Polarwinkeln der Knoten in dem Kundennetzwerk, um die Knoten der Mehrzahl von Anfangsrouten zuzuweisen;
Anwenden von Heuristik zum Optimieren der Mehrzahl von Anfangsrouten, wobei das Optimieren der Mehrzahl von Anfangsrouten eine Mehrzahl von nahegelegenen Routen kombiniert, wobei das Kombinieren der Mehrzahl von nahegelegenen Routen umfasst:
Teilen der Mehrzahl von Anfangsrouten in eine Mehrzahl von Segmenten, wobei jedes der Mehrzahl von Segmenten einen Satz von benachbarten Routen aus der Mehrzahl von Anfangsrouten umfasst; und
Erhalten eines optimalen Satzes von Routen, die der Mehrzahl von Anfangsrouten entsprechen, **gekennzeichnet durch** Durchführen der folgenden Schritte für jedes der Mehrzahl von Segmenten:
Erstellen einer Auftragsmatrix für den einen oder die mehreren Aufträge, wobei die Auftragsmatrix jeden des einen oder der mehreren Aufträge als betriebsfähig oder nicht betriebsfähig angibt, wobei sich die betriebsfähigen Aufträge auf die Aufträge beziehen, die innerhalb von Lieferzeitfenstern erreichen können;
Erhalten eines ersten Satzes von Routen aus der Mehrzahl von Anfangsrouten basierend auf Daten in der Auftragsmatrix, wobei Routen aus dem ersten Satz von Routen basierend auf Nähe gruppiert werden, um eine Mehrzahl von Routenpaaren zu bilden, wobei das Erhalten des ersten Satzes von Routen umfasst:
Bestimmen eines Vierecks, das jeder Route aus einem Satz von Routen innerhalb des Segments entspricht, wobei das Viereck (i) minimalen Breitengrad, (ii) minimalen Längengrad, (iii) maximalen Breitengrad und (iv) maximalen Längengrad als vier Eckpunkte aufweist, die basierend auf Geokoordinaten von Knoten in der Route identifiziert werden;
Abrufen von Geokoordinaten des Knotens in einer ersten Route in dem Satz von Routen;
Identifizieren einer zweiten Route derart, dass Geokoordinaten des Knotens in der ersten Route innerhalb des Vierecks liegen, das der zweiten Route entspricht;
Austauschen des Knotens in der ersten Route mit einem Knoten in der zweiten Route;
Identifizieren einer dritten Route und Einfügen des Knotens in der zweiten Route in eine Minimalabstandsposition der dritten Route;
Bestimmen, ob ein resultierender Satz von Routen mit aktualisierten ersten, zweiten und dritten Routen durchführbar ist, basierend auf einem berechneten Gesamtabstand für den resultierenden Satz von Routen, wobei das Bestimmen, ob der resultierende Satz von Routen durchführbar ist, Folgendes umfasst:
Berechnen eines Gesamtabstands aller Routen aus einer anfänglichen Lösung, wobei der Gesamtabstand der von allen Routen zurückgelegte Abstand ist;
Bestätigen, dass der Gesamtabstand des resultierenden Satzes von Routen einen geringeren Abstand als der aus der anfänglichen Lösung berechnete Abstand aufweist, wenn Knoten zwischen den Routen bewegt werden; und
Ersetzen der anfänglichen Lösung durch einen neu erhaltenen resultierenden Satz von Routen und Aktualisieren des anfänglichen Gesamtabstands; und
Durchführen einer lokalen Optimierung an den aktualisierten ersten, zweiten und dritten Routen, um den ersten Satz von Routen zu erhalten, wobei die lokale Optimierung das Austauschen einer oder mehrerer Bestellungen zwischen den ersten, zweiten und dritten Routen umfasst, so dass eine vordefinierte Lieferfensterbeschränkung erfüllt ist und der in den Routen zurückgelegte Gesamtabstand minimal ist;
Erzeugen eines zweiten Satzes von Routen, wobei der zweite Satz von Routen durch Austauschen von Bestellungen zwischen verschiedenen Routenpaaren in dem ersten Satz von Routen erzeugt wird;
Einfügen einer Bestellung von einer Route zu einer anderen Route in jedem Routenpaar in dem zweiten Satz von Routen;
Aktualisieren des Segments durch Einschließen eines vordefinierten Prozentsatzes von Routen, die in dem Segment vorhanden sind, und durch Nehmen eines vordefinierten Prozentsatzes von Routen aus verbleibenden Segmenten, wobei ein Fahrzeug von einem Depot startet und jeder Kunde nur einmal von einem beliebigen von einem oder mehreren Fahrzeugen besucht wird und die Summe einer von einem Fahrzeug genommenen Nachfrage die Kapazität Σ*qᵢ* <= *h* nicht überschreitet, wobei die Wartungszeit *sᵢ* an jedem Kundenpunkt zwischen der Wartungsstartzeit, *ssᵢ* und der Wartungsendzeit, *seᵢ,* liegen sollte. [*ssᵢ* < *sᵢ < seᵢ* ], oder wie anwendbar mit und ohne Lieferfenster, wobei das Fahrzeug, das früh ankommt, bis *ssᵢ* warten sollte, um die Wartung zu starten, und das Fahrzeug unmittelbar vom Kundenstandort nach der Wartung des Kunden *i* abfährt, und eine Bestellung als verletzt angesehen wird, wenn sie über ihre Wartungsendzeit, *seᵢ,* hinaus gewartet wird, und wobei das eine oder die mehreren Fahrzeuge nach Abschluss der Wartung aus dem Depot zurückkehren; und Verwenden der Routen nach dem Optimieren des Segments aus dem optimalen Satz von Routen zur Lieferung der Bestellungen.

5. System nach Anspruch 4, wobei der eine oder die mehreren Hardwareprozessoren konfiguriert sind, um das Austauschen der Bestellungen nur durchzuführen, wenn eine resultierende Route eine vordefinierte Lieferfensterbeschränkung erfüllt und den in den Routen zurückgelegten Gesamtabstand mindestens um einen vordefinierten Prozentsatz reduziert.

6. System nach Anspruch 4, wobei der eine oder die mehreren Hardwareprozessoren konfiguriert sind, um das Einfügen von Routen nur durchzuführen, wenn eine resultierende Route eine Lieferfensterbeschränkung erfüllt und den in den Routen zurückgelegten Gesamtabstand mindestens um einen vordefinierten Prozentsatz reduziert.

7. Ein oder mehrere nichtflüchtige maschinenlesbare Informationsspeichermedien, umfassend eine oder mehrere Anweisungen, die, wenn sie von einem oder mehreren Hardwareprozessoren ausgeführt werden, veranlassen zum:
Erhalten von Informationen über (i) ein Kundennetzwerk, wobei das Kundennetzwerk Knoten umfasst, die einer Mehrzahl von Kundenstandorten und einem Depot entsprechen, und Kanten, die Verbindungen zwischen den Kundenstandorten darstellen, (ii) Abstand zwischen jedem Paar von Kundenstandorten unter der Mehrzahl von Kundenstandorten, (iii) einen oder mehrere Aufträge, die von einem oder mehreren der Kunden von dem Kundennetzwerk empfangen werden, (iv) Servicestartzeit, (v) Serviceendzeit und (vi) Servicezeit;
Erstellen einer Mehrzahl von Anfangsrouten basierend auf dem Kundennetzwerk, durch Betrachten des Depots als eine Mittelkoordinate und durch Berechnen von Polarwinkeln der Knoten in dem Kundennetzwerk, um die Knoten der Mehrzahl von Anfangsrouten zuzuweisen;
Anwenden von Heuristik zum Optimieren der Mehrzahl von Anfangsrouten, wobei das Optimieren der Mehrzahl von Anfangsrouten eine Mehrzahl von nahegelegenen Routen kombiniert, wobei das Kombinieren der Mehrzahl von nahegelegenen Routen umfasst:
Teilen der Mehrzahl von Anfangsrouten in eine Mehrzahl von Segmenten, wobei jedes der Mehrzahl von Segmenten einen Satz von benachbarten Routen aus der Mehrzahl von Anfangsrouten umfasst; und
Erhalten eines optimalen Satzes von Routen, die der Mehrzahl von Anfangsrouten entsprechen, **gekennzeichnet durch** Durchführen der folgenden Schritte für jedes der Mehrzahl von Segmenten:
Erstellen einer Auftragsmatrix für den einen oder die mehreren Aufträge, wobei die Auftragsmatrix jeden des einen oder der mehreren Aufträge als betriebsfähig oder nicht betriebsfähig angibt, wobei sich die betriebsfähigen Aufträge auf die Aufträge beziehen, die innerhalb von Lieferzeitfenstern erreichen können;
Erhalten eines ersten Satzes von Routen aus der Mehrzahl von Anfangsrouten basierend auf Daten in der Auftragsmatrix, wobei Routen aus dem ersten Satz von Routen basierend auf Nähe gruppiert werden, um eine Mehrzahl von Routenpaaren zu bilden, wobei das Erhalten des ersten Satzes von Routen umfasst:
Bestimmen eines Vierecks, das jeder Route aus einem Satz von Routen innerhalb des Segments entspricht, wobei das Viereck (i) minimalen Breitengrad, (ii) minimalen Längengrad, (iii) maximalen Breitengrad und (iv) maximalen Längengrad als vier Eckpunkte aufweist, die basierend auf Geokoordinaten von Knoten in der Route identifiziert werden;
Abrufen von Geokoordinaten des Knotens in einer ersten Route in dem Satz von Routen;
Identifizieren einer zweiten Route derart, dass Geokoordinaten des Knotens in der ersten Route innerhalb des Vierecks liegen, das der zweiten Route entspricht;
Austauschen des Knotens in der ersten Route mit einem Knoten in der zweiten Route;
Identifizieren einer dritten Route und Einfügen des Knotens in der zweiten Route in eine Minimalabstandsposition der dritten Route;
Bestimmen, ob ein resultierender Satz von Routen mit aktualisierten ersten, zweiten und dritten Routen durchführbar ist, basierend auf einem berechneten Gesamtabstand für den resultierenden Satz von Routen, wobei das Bestimmen, ob der resultierende Satz von Routen durchführbar ist, Folgendes umfasst:
Berechnen eines Gesamtabstands aller Routen aus einer anfänglichen Lösung, wobei der Gesamtabstand der von allen Routen zurückgelegte Abstand ist;
Bestätigen, dass der Gesamtabstand des resultierenden Satzes von Routen einen geringeren Abstand als der aus der anfänglichen Lösung berechnete Abstand aufweist, wenn Knoten zwischen den Routen bewegt werden; und
Ersetzen der anfänglichen Lösung durch einen neu erhaltenen resultierenden Satz von Routen und Aktualisieren des anfänglichen Gesamtabstands; und
Durchführen einer lokalen Optimierung an den aktualisierten ersten, zweiten und dritten Routen, um den ersten Satz von Routen zu erhalten, wobei die lokale Optimierung das Austauschen einer oder mehrerer Bestellungen zwischen den ersten, zweiten und dritten Routen umfasst, so dass eine vordefinierte Lieferfensterbeschränkung erfüllt ist und der in den Routen zurückgelegte Gesamtabstand minimal ist;
Erzeugen eines zweiten Satzes von Routen, wobei der zweite Satz von Routen durch Austauschen von Bestellungen zwischen verschiedenen Routenpaaren in dem ersten Satz von Routen erzeugt wird;
Einfügen einer Bestellung von einer Route zu einer anderen Route in jedem Routenpaar in dem zweiten Satz von Routen;
Aktualisieren des Segments durch Einschließen eines vordefinierten Prozentsatzes von Routen, die in dem Segment vorhanden sind, und durch Nehmen eines vordefinierten Prozentsatzes von Routen aus verbleibenden Segmenten, wobei ein Fahrzeug von einem Depot startet und jeder Kunde nur einmal von einem beliebigen von einem oder mehreren Fahrzeugen besucht wird und die Summe einer von einem Fahrzeug genommenen Nachfrage die Kapazität Σ*qᵢ* <= *h* nicht überschreitet, wobei die Wartungszeit *sᵢ* an jedem Kundenpunkt zwischen der Wartungsstartzeit, *ssᵢ* und der Wartungsendzeit, *seᵢ,* liegen sollte. [*ssᵢ < sᵢ < seᵢ* ], oder wie anwendbar mit und ohne Lieferfenster, wobei das Fahrzeug, das früh ankommt, bis *ssᵢ* warten sollte, um die Wartung zu starten, und das Fahrzeug unmittelbar vom Kundenstandort nach der Wartung des Kunden *i* abfährt, und eine Bestellung als verletzt angesehen wird, wenn sie über ihre Wartungsendzeit, *seᵢ,* hinaus gewartet wird, und wobei das eine oder die mehreren Fahrzeuge nach Abschluss der Wartung aus dem Depot zurückkehren; und
Verwenden der Routen nach dem Optimieren des Segments aus dem optimalen Satz von Routen zur Lieferung der Bestellungen.

8. Ein oder mehrere nichtflüchtige maschinenlesbare Informationsspeichermedien nach Anspruch 7, wobei das Austauschen der Bestellungen nur durchgeführt wird, wenn eine resultierende Route eine vordefinierte Lieferfensterbeschränkung erfüllt und den in den Routen zurückgelegten Gesamtabstand mindestens um einen vordefinierten Prozentsatz reduziert.

9. Ein oder mehrere nichtflüchtige maschinenlesbare Informationsspeichermedien nach Anspruch 7, wobei das Einfügen von Routen nur durchgeführt wird, wenn eine resultierende Route eine Lieferfensterbeschränkung erfüllt und den in den Routen zurückgelegten Gesamtabstand mindestens um einen vordefinierten Prozentsatz reduziert.

## Revendications

1. Procédé mis en œuvre par processeur (200) pour l'optimisation d'itinéraire de véhicule, comprenant :
l'obtention (202), via un ou plusieurs processeurs matériels (102), d'informations sur (i) un réseau de clients, dans lequel le réseau de clients comprend des noeuds correspondant à une pluralité d'emplacements de clients et un dépôt, et des arêtes représentant des connexions entre les emplacements de clients, (ii) une distance entre chaque paire d'emplacements de clients parmi la pluralité d'emplacements de clients, (iii) une ou plusieurs commandes reçues d'un ou plusieurs des clients à partir du réseau de clients, (iv) une heure de début de service, (v) une heure de fin de service, et (vi) une heure de maintenance ;
la création (204) d'une pluralité d'itinéraires initiaux sur la base du réseau de clients, en considérant le dépôt comme une coordonnée centrale et en calculant des angles polaires des noeuds dans le réseau de clients, pour attribuer les noeuds à la pluralité d'itinéraires initiaux ;
l'application d'une heuristique pour optimiser la pluralité d'itinéraires initiaux, dans lequel l'optimisation de la pluralité d'itinéraires initiaux combine une pluralité d'itinéraires proches, dans lequel la combinaison de la pluralité d'itinéraires proches comprend :
la division (206) de la pluralité d'itinéraires initiaux en une pluralité de segments, dans lequel chacun de la pluralité de segments comprend un ensemble d'itinéraires adjacents parmi la pluralité d'itinéraires initiaux ; et
l'obtention (208) d'un ensemble optimal d'itinéraires correspondant à la pluralité d'itinéraires initiaux, **caractérisé par** la réalisation, pour chacun de la pluralité de segments, des étapes :
de création (208a) d'une matrice de commandes pour les une ou plusieurs commandes, dans lequel la matrice de commandes indique chacun des une ou plusieurs commandes comme étant utilisable ou non utilisable, dans lequel les commandes utilisables se réfèrent aux commandes qui peuvent atteindre à l'intérieur de fenêtres d'heure de livraison ;
d'obtention (208b) d'un premier ensemble d'itinéraires à partir de la pluralité d'itinéraires initiaux, sur la base de données dans la matrice de commandes, dans lequel des itinéraires parmi le premier ensemble d'itinéraires sont groupés sur la base d'une proximité pour former une pluralité de paires d'itinéraires, dans lequel l'obtention du premier ensemble d'itinéraires comprend :
la détermination d'un quadrilatère correspondant à chaque itinéraire parmi un ensemble d'itinéraires à l'intérieur du segment, dans lequel le quadrilatère a (i) une latitude minimale, (ii) une longitude minimale, (iii) une latitude maximale, et (iv) une longitude maximale, en tant que quatre points d'angle, identifiés sur la base de géocoordonnées de noeuds dans l'itinéraire ;
l'extraction de géocoordonnées du noeud dans un premier itinéraire dans l'ensemble d'itinéraires ;
l'identification d'un deuxième itinéraire de sorte que des géocoordonnées du noeud dans le premier itinéraire se trouvent à l'intérieur du quadrilatère correspondant au deuxième itinéraire ;
l'échange du noeud dans le premier itinéraire avec un noeud dans le deuxième itinéraire ;
l'identification d'un troisième itinéraire et l'insertion du noeud dans le deuxième itinéraire dans une position de distance minimale du troisième itinéraire ;
la détermination si un ensemble résultant d'itinéraires avec des premier, deuxième, et troisième itinéraires mis à jour est faisable sur la base d'une distance totale calculée pour l'ensemble résultant d'itinéraires, dans lequel la détermination si l'ensemble résultant d'itinéraires est faisable comprend :
le calcul à partir d'une solution initiale, d'une distance totale de tous les itinéraires, dans lequel la distance totale est la distance parcourue par tous les itinéraires ;
la confirmation que la distance totale de l'ensemble résultant d'itinéraires a une distance inférieure à la distance calculée à partir de la solution initiale lorsque des noeuds sont déplacés entre les itinéraires ; et
le remplacement de la solution initiale par un ensemble résultant nouvellement obtenu d'itinéraires et la mise à jour de la distance totale initiale ; et
la réalisation d'une optimisation locale sur les premier, deuxième et troisième itinéraires mis à jour pour obtenir le premier ensemble d'itinéraires, dans lequel l'optimisation locale comprend la permutation d'une ou plusieurs commandes entre les premier, deuxième et troisième itinéraires de sorte qu'une contrainte de fenêtre de livraison prédéfinie soit satisfaite et que la distance totale parcourue dans les itinéraires soit minimale ;
la génération (208c) d'un deuxième ensemble d'itinéraires, dans lequel le deuxième ensemble d'itinéraires est généré par permutation de commandes entre différentes paires d'itinéraires dans le premier ensemble d'itinéraires ;
l'insertion (208d) d'une commande d'un itinéraire à un autre itinéraire dans chaque paire d'itinéraires dans le deuxième ensemble d'itinéraires, dans lequel un véhicule commence à partir d'un dépôt et chaque client n'est visité qu'une fois par l'un quelconque d'un ou plusieurs véhicules et la somme d'une demande prise par un véhicule ne dépasse pas la capacité Σ*qᵢ* <= *h,* dans lequel l'heure de maintenance *sᵢ*, à chaque point de client devrait être entre l'heure de début de service, *ssᵢ* et l'heure de fin de service, *seᵢ.* [*ssᵢ < sᵢ* < *seᵢ*]*,* ou comme applicable avec et sans fenêtres de livraison, dans lequel le véhicule arrivant tôt devrait attendre jusqu'à *ssᵢ* pour commencer le service et le véhicule part immédiatement de l'emplacement de client après la maintenance du client *i*, et une commande est considérée comme violée si elle est maintenue au-delà de son heure de fin de service, *seᵢ,* et dans lequel les un ou plusieurs véhicules reviennent du dépôt après l'achèvement du service ;
la mise à jour (208e) du segment en incluant un pourcentage prédéfini d'itinéraires existant dans le segment et en prenant un pourcentage prédéfini d'itinéraires à partir des segments restants ; et
l'utilisation des itinéraires après l'optimisation du segment à partir de l'ensemble optimal d'itinéraires pour la livraison des commandes.

2. Procédé selon la revendication 1, dans lequel la permutation des commandes est réalisée seulement si un itinéraire résultant satisfait une contrainte de fenêtre de livraison prédéfinie et réduit la distance totale parcourue dans les itinéraires au moins d'un pourcentage prédéfini.

3. Procédé selon la revendication 1, dans lequel l'insertion d'itinéraires est réalisée seulement si un itinéraire résultant satisfait une contrainte de fenêtre de livraison et réduit la distance totale parcourue dans les itinéraires au moins d'un pourcentage prédéfini.

4. Système pour l'optimisation d'itinéraire de véhicule, comprenant :
un ou plusieurs processeurs matériels (102) ;
une interface de communication (112) ; et
une mémoire (104) stockant une pluralité d'instructions, dans lequel la pluralité d'instructions, lorsqu'elles sont exécutées, amènent les un ou plusieurs processeurs matériels à :
obtenir des informations sur (i) un réseau de clients, dans lequel le réseau de clients comprend des noeuds correspondant à une pluralité d'emplacements de clients et un dépôt, et des arêtes représentant des connexions entre les emplacements de clients, (ii) une distance entre chaque paire d'emplacements de clients parmi la pluralité d'emplacements de clients, (iii) une ou plusieurs commandes reçues d'un ou plusieurs des clients à partir du réseau de clients, (iv) une heure de début de service, (v) une heure de fin de service, et (vi) une heure de maintenance ;
créer une pluralité d'itinéraires initiaux sur la base du réseau de clients, en considérant le dépôt comme une coordonnée centrale et en calculant des angles polaires des noeuds dans le réseau de clients, pour attribuer les noeuds à la pluralité d'itinéraires initiaux ;
appliquer une heuristique pour optimiser la pluralité d'itinéraires initiaux, dans lequel l'optimisation de la pluralité d'itinéraires initiaux combine une pluralité d'itinéraires proches, dans lequel la combinaison de la pluralité d'itinéraires proches comprend :
la division de la pluralité d'itinéraires initiaux en une pluralité de segments, dans lequel chacun de la pluralité de segments comprend un ensemble d'itinéraires adjacents parmi la pluralité d'itinéraires initiaux ; et
l'obtention d'un ensemble optimal d'itinéraires correspondant à la pluralité d'itinéraires initiaux, **caractérisé par** la réalisation, pour chacun de la pluralité de segments, des étapes :
de création d'une matrice de commandes pour les une ou plusieurs commandes, dans lequel la matrice de commandes indique chacun des une ou plusieurs commandes comme étant utilisable ou non utilisable, dans lequel les commandes utilisables se réfèrent aux commandes qui peuvent atteindre à l'intérieur de fenêtres d'heure de livraison ;
d'obtention d'un premier ensemble d'itinéraires à partir de la pluralité d'itinéraires initiaux, sur la base de données dans la matrice de commandes, dans lequel des itinéraires parmi le premier ensemble d'itinéraires sont groupés sur la base d'une proximité pour former une pluralité de paires d'itinéraires, dans lequel l'obtention du premier ensemble d'itinéraires comprend :
la détermination d'un quadrilatère correspondant à chaque itinéraire parmi un ensemble d'itinéraires à l'intérieur du segment, dans lequel le quadrilatère a (i) une latitude minimale, (ii) une longitude minimale, (iii) une latitude maximale, et (iv) une longitude maximale, en tant que quatre points d'angle, identifiés sur la base de géocoordonnées de noeuds dans l'itinéraire ;
l'extraction de géocoordonnées du noeud dans un premier itinéraire dans l'ensemble d'itinéraires ;
l'identification d'un deuxième itinéraire de sorte que des géocoordonnées du noeud dans le premier itinéraire se trouvent à l'intérieur du quadrilatère correspondant au deuxième itinéraire ;
l'échange du noeud dans le premier itinéraire avec un noeud dans le deuxième itinéraire ;
l'identification d'un troisième itinéraire et l'insertion du noeud dans le deuxième itinéraire dans une position de distance minimale du troisième itinéraire ;
la détermination si un ensemble résultant d'itinéraires avec des premier, deuxième, et troisième itinéraires mis à jour est faisable sur la base d'une distance totale calculée pour l'ensemble résultant d'itinéraires, dans lequel la détermination si l'ensemble résultant d'itinéraires est faisable comprend :
le calcul à partir d'une solution initiale, d'une distance totale de tous les itinéraires, dans lequel la distance totale est la distance parcourue par tous les itinéraires ;
la confirmation que la distance totale de l'ensemble résultant d'itinéraires a une distance inférieure à la distance calculée à partir de la solution initiale lorsque des noeuds sont déplacés entre les itinéraires ; et
le remplacement de la solution initiale par un ensemble résultant nouvellement obtenu d'itinéraires et la mise à jour de la distance totale initiale ; et
la réalisation d'une optimisation locale sur les premier, deuxième et troisième itinéraires mis à jour pour obtenir le premier ensemble d'itinéraires, dans lequel l'optimisation locale comprend la permutation d'une ou plusieurs commandes entre les premier, deuxième et troisième itinéraires de sorte qu'une contrainte de fenêtre de livraison prédéfinie soit satisfaite et que la distance totale parcourue dans les itinéraires soit minimale ;
la génération d'un deuxième ensemble d'itinéraires, dans lequel le deuxième ensemble d'itinéraires est généré par permutation de commandes entre différentes paires d'itinéraires dans le premier ensemble d'itinéraires ;
l'insertion d'une commande d'un itinéraire à un autre itinéraire dans chaque paire d'itinéraires dans le deuxième ensemble d'itinéraires ;
la mise à jour du segment en incluant un pourcentage prédéfini d'itinéraires existant dans le segment et en prenant un pourcentage prédéfini d'itinéraires à partir des segments restants, dans lequel un véhicule commence à partir d'un dépôt et chaque client n'est visité qu'une fois par l'un quelconque d'un ou plusieurs véhicules et la somme d'une demande prise par un véhicule ne dépasse pas la capacité Σ*qᵢ* <= *h,* dans lequel l'heure de maintenance *sᵢ*, à chaque point de client devrait être entre l'heure de début de service, *ssᵢ* et l'heure de fin de service, *seᵢ.* [*ssᵢ < sᵢ* < *seᵢ*]*,* ou comme applicable avec et sans fenêtres de livraison, dans lequel le véhicule arrivant tôt devrait attendre jusqu'à *ssᵢ* pour commencer le service et le véhicule part immédiatement de l'emplacement de client après la maintenance du client *i*, et une commande est considérée comme violée si elle est maintenue au-delà de son heure de fin de service, *seᵢ,* et dans lequel les un ou plusieurs véhicules reviennent du dépôt après l'achèvement du service ; et
l'utilisation des itinéraires après l'optimisation du segment à partir de l'ensemble optimal d'itinéraires pour la livraison des commandes.

5. Système selon la revendication 4, dans lequel les un ou plusieurs processeurs matériels sont configurés pour réaliser la permutation des commandes seulement si un itinéraire résultant satisfait une contrainte de fenêtre de livraison prédéfinie et réduit la distance totale parcourue dans les itinéraires au moins d'un pourcentage prédéfini.

6. Système selon la revendication 4, dans lequel les un ou plusieurs processeurs matériels sont configurés pour réaliser l'insertion d'itinéraires seulement si un itinéraire résultant satisfait une contrainte de fenêtre de livraison et réduit la distance totale parcourue dans les itinéraires au moins d'un pourcentage prédéfini.

7. Un ou plusieurs supports de stockage d'informations lisibles par machine non transitoires comprenant une ou plusieurs instructions qui, lorsqu'elles sont exécutées par un ou plusieurs processeurs matériels, amènent :
l'obtention d'informations sur (i) un réseau de clients, dans lequel le réseau de clients comprend des noeuds correspondant à une pluralité d'emplacements de clients et un dépôt, et des arêtes représentant des connexions entre les emplacements de clients, (ii) une distance entre chaque paire d'emplacements de clients parmi la pluralité d'emplacements de clients, (iii) une ou plusieurs commandes reçues d'un ou plusieurs des clients à partir du réseau de clients, (iv) une heure de début de service, (v) une heure de fin de service, et (vi) une heure de maintenance ;
la création d'une pluralité d'itinéraires initiaux sur la base du réseau de clients, en considérant le dépôt comme une coordonnée centrale et en calculant des angles polaires des noeuds dans le réseau de clients, pour attribuer les noeuds à la pluralité d'itinéraires initiaux ;
l'application d'une heuristique pour optimiser la pluralité d'itinéraires initiaux, dans lequel l'optimisation de la pluralité d'itinéraires initiaux combine une pluralité d'itinéraires proches, dans lequel la combinaison de la pluralité d'itinéraires proches comprend :
la division de la pluralité d'itinéraires initiaux en une pluralité de segments, dans lequel chacun de la pluralité de segments comprend un ensemble d'itinéraires adjacents parmi la pluralité d'itinéraires initiaux ; et
l'obtention d'un ensemble optimal d'itinéraires correspondant à la pluralité d'itinéraires initiaux, **caractérisé par** la réalisation, pour chacun de la pluralité de segments, des étapes :
de création d'une matrice de commandes pour les une ou plusieurs commandes, dans lequel la matrice de commandes indique chacun des une ou plusieurs commandes comme étant utilisable ou non utilisable, dans lequel les commandes utilisables se réfèrent aux commandes qui peuvent atteindre à l'intérieur de fenêtres d'heure de livraison ;
d'obtention d'un premier ensemble d'itinéraires à partir de la pluralité d'itinéraires initiaux, sur la base de données dans la matrice de commandes, dans lequel des itinéraires parmi le premier ensemble d'itinéraires sont groupés sur la base d'une proximité pour former une pluralité de paires d'itinéraires, dans lequel l'obtention du premier ensemble d'itinéraires comprend :
la détermination d'un quadrilatère correspondant à chaque itinéraire parmi un ensemble d'itinéraires à l'intérieur du segment, dans lequel le quadrilatère a (i) une latitude minimale, (ii) une longitude minimale, (iii) une latitude maximale, et (iv) une longitude maximale, en tant que quatre points d'angle, identifiés sur la base de géocoordonnées de noeuds dans l'itinéraire ;
l'extraction de géocoordonnées du noeud dans un premier itinéraire dans l'ensemble d'itinéraires ;
l'identification d'un deuxième itinéraire de sorte que des géocoordonnées du noeud dans le premier itinéraire se trouvent à l'intérieur du quadrilatère correspondant au deuxième itinéraire ;
l'échange du noeud dans le premier itinéraire avec un noeud dans le deuxième itinéraire ;
l'identification d'un troisième itinéraire et l'insertion du noeud dans le deuxième itinéraire dans une position de distance minimale du troisième itinéraire ;
la détermination si un ensemble résultant d'itinéraires avec des premier, deuxième, et troisième itinéraires mis à jour est faisable sur la base d'une distance totale calculée pour l'ensemble résultant d'itinéraires, dans lequel la détermination si l'ensemble résultant d'itinéraires est faisable comprend :
le calcul à partir d'une solution initiale, d'une distance totale de tous les itinéraires, dans lequel la distance totale est la distance parcourue par tous les itinéraires ;
la confirmation que la distance totale de l'ensemble résultant d'itinéraires a une distance inférieure à la distance calculée à partir de la solution initiale lorsque des noeuds sont déplacés entre les itinéraires ; et
le remplacement de la solution initiale par un ensemble résultant nouvellement obtenu d'itinéraires et la mise à jour de la distance totale initiale ; et
la réalisation d'une optimisation locale sur les premier, deuxième et troisième itinéraires mis à jour pour obtenir le premier ensemble d'itinéraires, dans lequel l'optimisation locale comprend la permutation d'une ou plusieurs commandes entre les premier, deuxième et troisième itinéraires de sorte qu'une contrainte de fenêtre de livraison prédéfinie soit satisfaite et que la distance totale parcourue dans les itinéraires soit minimale ;
la génération d'un deuxième ensemble d'itinéraires, dans lequel le deuxième ensemble d'itinéraires est généré par permutation de commandes entre différentes paires d'itinéraires dans le premier ensemble d'itinéraires ;
l'insertion d'une commande d'un itinéraire à un autre itinéraire dans chaque paire d'itinéraires dans le deuxième ensemble d'itinéraires ;
la mise à jour du segment en incluant un pourcentage prédéfini d'itinéraires existant dans le segment et en prenant un pourcentage prédéfini d'itinéraires à partir des segments restants, dans lequel un véhicule commence à partir d'un dépôt et chaque client n'est visité qu'une fois par l'un quelconque d'un ou plusieurs véhicules et la somme d'une demande prise par un véhicule ne dépasse pas la capacité Σ*qᵢ* <= *h,* dans lequel l'heure de maintenance *sᵢ*, à chaque point de client devrait être entre l'heure de début de service, *ssᵢ* et l'heure de fin de service, *seᵢ.* [*ssᵢ < sᵢ < seᵢ*]*,* ou comme applicable avec et sans fenêtres de livraison, dans lequel le véhicule arrivant tôt devrait attendre jusqu'à *ssᵢ* pour commencer le service et le véhicule part immédiatement de l'emplacement de client après la maintenance du client *i*, et une commande est considérée comme violée si elle est maintenue au-delà de son heure de fin de service, *seᵢ,* et dans lequel les un ou plusieurs véhicules reviennent du dépôt après l'achèvement du service ; et
l'utilisation des itinéraires après l'optimisation du segment à partir de l'ensemble optimal d'itinéraires pour la livraison des commandes.

8. Un ou plusieurs supports de stockage d'informations lisibles par machine non transitoires selon la revendication 7, dans lequel la permutation des commandes est réalisée seulement si un itinéraire résultant satisfait une contrainte de fenêtre de livraison prédéfinie et réduit la distance totale parcourue dans les itinéraires au moins d'un pourcentage prédéfini.

9. Un ou plusieurs supports de stockage d'informations lisibles par machine non transitoires selon la revendication 7, dans lequel l'insertion d'itinéraires est réalisée seulement si un itinéraire résultant satisfait une contrainte de fenêtre de livraison et réduit la distance totale parcourue dans les itinéraires au moins d'un pourcentage prédéfini.
